# EUROPÄISCHE PATENTSCHRIFT

(11) **EP 0 963 699 B1**
(45) Veröffentlichungstag und Bekanntmachung des Hinweises auf die Patenterteilung: **03.09.2003**
(21) Anmeldenummer: 98110374.0
(22) Anmeldetag: 05.06.1998
(51) Int. Cl.: A22C 11/12

(54) **Anordnung zum Anbringen einer Verschlussklammer an einer Verpackungshülle**
Arrangement for applying a sealing clip to packaging envelops
Système de pose d'une agrafe de fermeture sur des enveloppes d'emballage

(43) Veröffentlichungstag der Anmeldung: 15.12.1999
(73) Patentinhaber: Tipper Tie technopack GmbH, D-21509 Glinde (DE)
(72) Erfinder: Plewa, Manfred Dipl.-Ing., 27283 Verden (DE)
(74) Vertreter: Glawe, Delfs, Moll & Partner

(56) Entgegenhaltungen:
- EP-A- 0 030 755
- EP-A- 0 171 669
- DE-A- 2 950 603
- DE-A- 3 109 995
- DE-A- 3 441 303
- DE-A- 4 035 939
- DE-C- 3 322 759

## Beschreibung

Die Erfindung betrifft eine Anordnung zum Anbringen einer Verschlußklammer an einer Verpackungshülle, mit einer zur Verschlußstelle führenden Führungsbahn für Verschlußklammern, und mit einer Einrichtung zum Einbringen einer Aufhängeschlaufe in die Führungsbahn unter Verwendung eines flexiblen Schlaufenträgerbandes, auf dem eine Mehrzahl von Aufhängeschlaufen aufgereiht sind.

Es ist bekannt, an einem Ende von Würsten eine Aufhängeschlaufe vorzusehen, an der die Wurst aufgehängt werden kann. Beim Verschließen des Wurstendes mit einer Verschlußklammer (einer Biegeklammer oder einem sogenannten Clip) wird die Aufhängeschlaufe mittels dieses Clips am Wurstende befestigt.

Problematisch ist das Zuführen der auf dem Trägerband magazinierten Aufhängeschlaufen in eine Position, in der sie von der Verschlußklammer erfaßt und im Verschließvorgang eingebunden werden können. Bei verschiedenen bekannten Anordnungen werden die Schlaufen entfernt von der Führungsbahn bzw. Verschlußstelle vom Trägerband abgenommen und mittels eines separaten Organs an die Stelle geführt, an der sie von der Verschlußklammer erfaßt werden können (DE-C-33 22 759, DE-A-29 50 603). Dies ist nachteilig, da das zusätzliche Förderorgan für die Schlaufen konstruktiv aufwendig ist.

Es ist bereits vorgeschlagen worden, das Schlaufenträgerband bis unmittelbar in den Bereich der Führungsbahn der Verschlußklammer zu führen und dort eine Umlenkung vorzusehen, so daß sich eine Schlaufe vom Trägerband ablöst und ihr vorlaufendes Ende sich in die Führungsbahn schiebt (DE-C-34 41 303 und DE-A-34 41 303). Bei diesem Stand der Technik entspricht die Einschubrichtung der Aufhängeschlaufe in die Führungsbahn der Verschlußklammer der Förderrichtung des Schlaufenträgerbandes unmittelbar vor der Umlenkung. Die Schlaufe muß von der Seite her in die Führungsbahn gebracht werden, so daß die Zufuhr des Schlaufenträgerbandes aus einer Richtung senkrecht zur Führungsbahn erfolgt. Dies ist nachteilig, da eine solche seitliche Schlaufenzufuhr häufig an Platzproblemen scheitert. Nachteilig an diesem Stand der Technik ist ferner, daß die Aufhängeschlaufe durch eine verhältnismäßig kleine seitliche Öffnung (bspw. einen Schlitz) in die Führungsbahn eingefädelt werden muß. Stößt die Schlaufe beim Einfädeln gegen den Rand des Schlitzes, führt dies zu Betriebsstörungen.

Der Erfindung liegt die Aufgabe zugrunde, eine Anordnung der eingangs genannten Art zu schaffen, die eine einfache, sichere und platzsparende Schlaufenzufuhr zur Führungsbahn zwecks Mitnahme der Schlaufe durch eine Verschlußklammer zur Verschlußstelle ermöglicht.

Die Erfindung löst diese Aufgabe dadurch, daß die Zufuhr des Schlaufenträgerbandes zur Führungsbahn in einem spitzen Winkel relativ zur Richtung dieser Führungsbahn erfolgt und daß im Bereich der Führungsbahn eine Umlenkung des Schlaufenträgerbandes dergestalt vorgesehen ist, daß durch den Umlenkvorgang das vorlaufende Ende einer Schlaufe vom Trägerband abgelöst und in die Führungsbahn eingeschwenkt wird.

Zunächst seien einige im Rahmen der Erfindung verwendete Begriffe erläutert.

Die Führungsbahn für Verschlußklammern dient der Führung von aus einem Magazin entnommenen Verschlußklammern zur Verschlußstelle mittels eines Stempels. Als Widerlager ist im Bereich der Verschlußstelle eine Matrize vorgesehen. Die Führungsbahn weist in der Regel zwei einander gegenüberstehende, parallele Nuten auf, die die Schenkel der in der Regel etwa U-förmigen Verschlußklammer aufnehmen und führen. Die Führungsbahn kann als länglicher Durchbruch in einer Schloßplatte ausgebildet sein, die einander gegenüberliegenden Seiten des Durchbruchs weisen die genannten Führungsnuten auf.

Die erfindungsgemäße Anordnung ist zur Verwendung mit einem flexiblen Schlaufenträgerband vorgesehen, auf dem Aufhängeschlaufen aufgereiht sind. Es dient der Magazinierung dieser Schlaufen. Das flexible Band besteht üblicherweise aus einem Kunststoff. Auf das Band sind die Schnurschlaufen in der Regel aufgeklebt. Die Schnurschlaufen werden vorzugsweise aus einem Schnurende gebildet, dessen Enden miteinander verknotet sind, so daß die Schlaufe eine längliche Form aufweist.

Erfindungsgemäß erfolgt die Zufuhr des Schlaufenträgerbandes zur Führungsbahn in einem spitzen Winkel relativ zur Richtung dieser Führungsbahn. Die spitzwinklige Zufuhr erlaubt das Heranführen des Trägerbandes aus einer Richtung, die nicht durch den Querschnitt der gefüllten Verpackungshülle (Wurstquerschnitt) oder andere Maschinenteile "besetzt" ist.

Ein weiteres wichtiges Merkmal der Erfindung ist eine Umlenkung des Schlaufenträgerbandes unmittelbar im Bereich der Führungsbahn dergestalt, daß durch diesen Umlenkvorgang das vorlaufende Ende einer Schlaufe vom Trägerband abgelöst und die Führungsbahn eingeschwenkt wird. Der Begriff "Einschwenken" bedeutet im Rahmen der Erfindung, daß das vorlaufende Ende der abzulösenden Schlaufe nicht lediglich in der Zufuhrrichtung des Schlaufenträgerbandes unmittelbar vor der Umlenkung weiterläuft, sondern das es während des Umlenkvorgangs eine Richtungsänderung erfährt, durch die dieses Ende aus der ursprünglich spitzwinkligen Zufuhrrichtung in eine Richtung vorzugsweise etwa quer zur Richtung der Führungsbahn verschwenkt wird, in diese Führungsbahn zu liegen kommt und beim Verschieben des Clips mittels des Stempels auf die Matrize von diesem mitgenommen und eingebunden werden kann. Die Umlenkung des Trägerbandes erfolgt vorzugsweise nicht an einer scharfen Kante, sondern an einer gerundeten Fläche, um die Schwenkbewegung des vorlaufenden Schlaufenbandes während des Ablösevorgangs von dem Trägerband zu unterstützen.

Kern der Erfindung ist somit die Kombination einer platzsparenden spitzwinkligen Zuführung des Schlaufenträgerbandes mit einer Umlenkung im Bereich der Führungsbahn dergestalt, daß jeweils eine Schlaufe mit ihrem vorlaufenden Ende in die Führungsbahn eingeschwenkt und nicht, wie im Stand der Technik gemäß DE-C-34 41 303 vorgesehen, senkrecht von der Seite in Zufuhrrichtung des Bandes in die Führungsbahn eingefädelt wird. Das Einschwenken vermeidet die Probleme, die durch Einfädeln einer Schlaufe durch einen schmalen Schlitz entstehen können. Da das Schlaufenende während des Einschwenkvorgangs eine Bewegungskomponente in Längsrichtung der Verschlußkammerführungsbahn erfährt, kann die Schlaufe gezielt an einer gewünschten Stelle der Führungsbahn plaziert werden, indem sie bspw. gegen einen die Verschlußklammer halternden Teil als Anschlag (in Axialrichtung der Führungsbahn) gelegt wird.

In der Regel ist die Breite einer Schlaufe größer als die lichte Weite der Klammerführungsbahn (der Raum zwischen den beiden Führungsnuten). Vorzugsweise ist daher im Bereich der Verschlußstelle ein beweglicher Abschnitt der die Führungsbahn begrenzenden Führungseinrichtungen vorgesehen, der von einer Schließstellung in eine Öffnungsstelle gebracht werden kann. Die Schloßplatte kann bspw. einen verschwenkbaren Ausleger aufweisen, in dem eine Führungsnut angeordnet ist. Öffnet man diesen Ausleger durch Verschwenken, schafft man genügend Raum für das Einschwenken einer Schlaufe in die Führungsbahn. Der Ausleger wird anschließend in seine Schließstellung gebracht, in der seine Führungsnut parallel zu der zweiten, ortsfest an der Schloßplatte angebrachten Führungsnut verläuft.

Alternativ kann der unterste Teil der Führungsbahn mit der Matrize an einem nach unten verschwenkbaren Hebel angeordnet sein. Die Matrize wird zum Einlegen bzw. Raffen der Verpakkungshülle nach unten weggefahren, nach dem Einschwenken einer Schlaufe in die Führungsbahn kann sie von unten in ihre Schließstellung gebracht werden, in der sie das Widerlager für den vom Stempel zugeführten Clip bildet.

Die Zufuhr des Schlaufenträgerbandes erfolgt vorzugsweise in einem Winkel von 10° bis 80°, weiter vorzugsweise 20° bis 70°, besonders bevorzugt 30° bis 60° relativ zur Richtung der Führungsbahn für Verschlußklammern. Besonders bevorzugt ist es, wenn die Zufuhr des Bandes von oben zunächst parallel zum Betätigungsorgan für den Clipstempel (üblicherweise einem pneumatischen Zylinder) erfolgt und das Band unterhalb dieses Zylinders schräg in einem Winkel von 30° bis 60° relativ zur Richtung der Führungsbahn der Umlenkkante zugeführt wird, die dem Ablösen der Schlaufen vom Trägerband und deren Einschwenken in die Führungsbahn dient.

Nach Abnahme der Schlaufen muß das leere Trägerband aus dem Verschlußbereich weggeführt werden. Prinzipiell kann dieses Abführen hinter der Umlenkung wieder nach oben, also etwa entgegen der Zufuhrrichtung, erfolgen.

Besonders bevorzugt ist es jedoch, daß in Förderrichtung des Schlaufenträgerbandes hinter der Umlenkung zum Abschälen der Schlaufen eine zweite Umlenkung des leeren Trägerbandes dergestalt erfolgt, das es seitlich von der Führungsbahn weg abgeführt wird. Besonders bevorzugt ist die Abführung quer (senkrecht) zur Führungsbahn. Diese zweite Umlenkung kann an einer relativ zur Führungsbahn geneigten Umlenkkante erfolgen. Vorzugsweise wird das leere Band hinter der ersten Umlenkung zunächst ein kurzes Stück nach oben (entgegen der Betätigungsrichtung des Clipstempels) geführt, bis es den Bereich verlassen hat, indem aufgrund des Querschnitts der Verpackungshülle und etwaiger Maschinenteile eine seitliche Abfuhr des leeren Bandes nicht möglich oder behindert ist. An einer geeigneten Stelle erfolgt dann die zweite Umlenkung an einer schrägen Formschulter, so daß das Band etwa senkrecht von der Führungsbahn weg abgezogen werden kann.

Gegenstand der Erfindung ist ferner ein Verfahren zum Anbringen einer Verschlußklammer und einer Aufhängeschlaufe an einer Verpackungshülle unter Verwendung der erfindungsgemäßen Anordnung. Es weist folgende Schritte auf:
- Einlegen des zu verschließenden Abschnitts der Verpakkungshülle in die Verschlußstelle der Anordnung,
- Einlegen einer Verschlußklammer in die Führungsbahn,
- Zuführen eines Schlaufenträgerbandes in einem spitzen Winkel relativ zur Richtung der Führungsbahn,
- Einschwenken einer Aufhängeschlaufe in die Führungsbahn der Verschlußklammern durch Transportieren des Schlaufenträgerbandes in Förderrichtung,
- Setzen der Klammer auf die Verpackungshülle unter Mitnahme der in die Klammerführungsbahn eingeschwenkten Aufhängeschlaufe,
- Entnahme der verschlossenen Verpackungshülle.

Das erfindungsgemäße Verfahren wird vorzugsweise durchgeführt unter Verwendung eines Schlaufenträgerbandes, auf dem die einzelnen Schlaufen längs angeordnet sind. Dies bedeutet, daß die größte Erstreckung jeder Schlaufe in Längsrichtung des Bandes weist. Besonders bevorzugt sind die Schlaufen auf dem Trägerband einander überlappend angeordnet. Im Stand der Technik werden solche mit überlappenden Schlaufen versehende Bänder (geschuppte Bänder) in der Regel so eingesetzt, daß in Förderrichtung des Bandes das nachlaufende Ende einer Schlaufe unter dem vorlaufenden Ende der nächsten Schlaufe zu liegen kommt. Das vorlaufende Ende der jeweils nächsten Schlaufe soll so auf die im Ablöseprozeß befindlichen Schlaufe noch eine gewisse Haltewirkung ausüben und vorzeitiges Ablösen verhindern. Im Rahmen des erfindungsgemäßen Verfahrens wird jedoch besonders bevorzugt ein Band verwendet, bei dem das nachlaufende Ende einer vorderen Schlaufe über und nicht unter dem vorlaufenden Ende der nächstfolgenden Schlaufe zu liegen kommt. Die Erfindung hat erkannt, daß für das erfindungsgemäße Verfahren eine "Haltewirkung" des vorlaufenden Endes der jeweils nächstfolgenden Schlaufe nicht erforderlich ist. Im Gegenteil werden so Betriebsstörungen vermieden, da das nachlaufende Ende der jeweils abzulösenden Schlaufe nicht erst unter dem vorlaufenden Ende der nachfolgenden Schlaufe hervorgezogen werden muß, sondern sofort insgesamt vom Trägerband frei kommt.

Eine Ausführungsform der Erfindung wird im folgenden anhand der Zeichnung beschrieben. Darin zeigen:
- Fig. 1:: eine Draufsicht auf eine erfindungsgemäße Anordnung von der Seite und senkrecht auf die Ebene der Schloßplatte,
- Fig. 2:: eine weitere Draufsicht von der Seite parallel zur Schloßplatte.

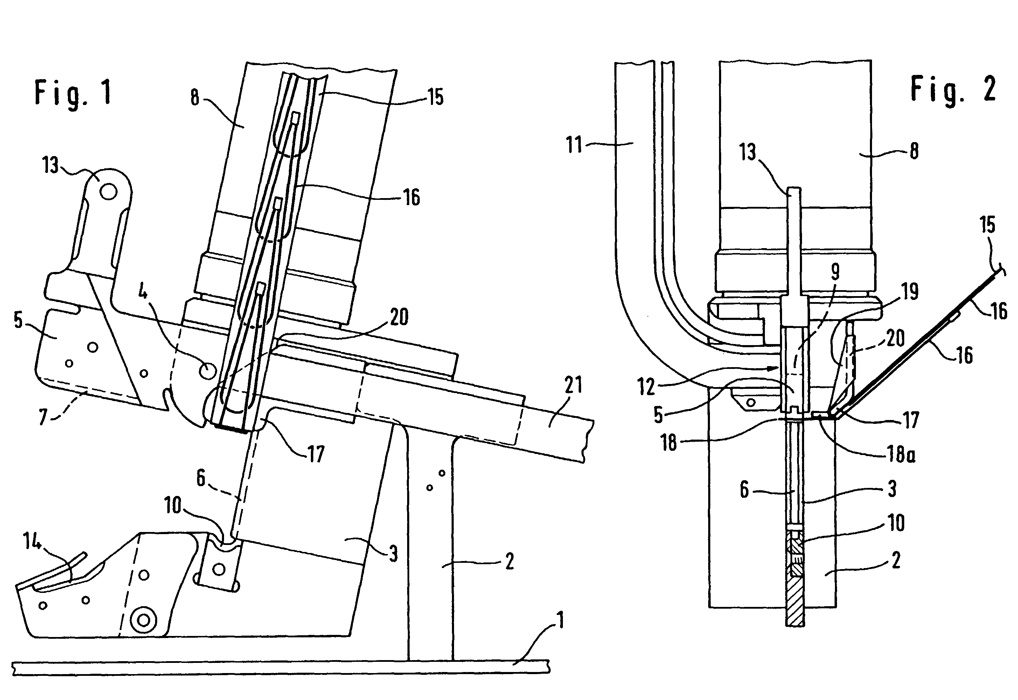

Die Zeichnung zeigt einen handbetätigten Clipautomaten zum Anbringen von Verschlußklammern an Würsten oder dergleichen. Auf einer Grundplatte 1 und einem Gestell 2 ist eine Schloßplatte 3 angeordnet, die einen um eine Achse 4 verschwenkbaren Auslegerteil 5 aufweist, der in Fig. 1 in seiner Öffnungsstellung gezeigt ist. Die Schloßplatte weist Führungsnuten 6,7 auf, die im Schließzustand des Auslegerteils 5 einander gegenüberliegen und gemeinsam eine Führungsbahn für Verschlußklammern bilden.

Ein pneumatischer Zylinder 8 betätigt einen bei 9 angedeuteten Stempel, der Verschlußklammern nach unten gegen die Matrize 10 preßt. Die Verschlußklammern werden aus einem Magazin 11 zugeführt, sie werden bei 12 von der Seite her in die Führungsbahn geschoben, anschließend vom Stempel 9 erfaßt und auf die Matrize getrieben. Der Auslegerteil 5 der Schloßplatte 3 ist mittels eines Handgriffs 13 betätigbar. Eine Schneide 14 dient dem Abtrennen der durch die Verschlußklammer verschlossenen Wurst.

Soweit bisher beschrieben entspricht diese Anordnung dem Stand der Technik und ist in Aufbau und Funktion dem Fachmann geläufig.

Erfindungsgemäß ist nun vorgesehen, ein Schlaufenträgerband 15 mit geschuppt übereinander eingeordneten Aufhängeschlaufen 16 zunächst von oben etwa parallel zum pneumatischen Zylinder 8 zuzuführen und unterhalb dieses Zylinders mittels einer in der Zeichnung nicht dargestellten Umlenkrolle dann schräg in einem Winkel von etwa 50° relativ zur Richtung der Klammerführungsbahn auf diese Führungsbahn zuzuführen.

Im Bereich der Führungsbahn ist ein gerundetes Umlenkblech 17 angeordnet, um das herum das Trägerband 15 umgelenkt wird. Durch die Umlenkung wird ein vorlaufendes Ende 18 einer Schlaufe 16 abgeschält und in die von der Nut 6 begrenzte Führungsbahn eingeschwenkt. In der in Fig. 2 gezeigten Stellung hat dieses vorlaufende Ende 18 eine Schwenkbewegung vollzogen, die es etwa senkrecht zur Ebene der Schloßplatte 3 stehen läßt. Das vorlaufende Ende 18 wird durch die Schwenkbewegung nach oben gegen die in der Zeichnung nicht dargestellten Halteelemente (bspw. ein Halteklotz oder dergleichen) für die in der Führungsbahn befindliche Verschlußklammer geschlagen. Dieses Einschwenken in die Führungsbahn stellt sicher, daß die entsprechende Schlaufe anschließend von der Verschlußklammer mitgenommen wird.

Unterstützt werden kann das gewünschte Einschwenken durch ein in Förderrichtung des Bandes hinter der Umlenkung 17 angeordnetes Blech 18. Das bei 19 angedeutete leere Trägerband wird hinter der Umlenkung 17 zunächst schräg nach oben abgezogen, es durchläuft dabei einen Schlitz zwischen der Umlenkung 17 und dem Blech 18, das wiederum das Einschwenken des vorlaufenden Endes 18 der Schlaufe in die Führungsbahn unterstützt.

Das leere Trägerband 19 wird an einer schrägen Schulter 20 ein zweites Mal umgelenkt und anschließend senkrecht zur Richtung der Klammerführungsbahn und parallel zur Schloßplatte 3 abgeführt, wie bei 21 angedeutet.

Die Funktionsweise der erfindungsgemäßen Anordnung ist wie folgt:

Nach dem Verschließen einer Wurst wird mittels des Griffs 13 der abklappbare Teil 5 der Schloßplatte 3 geöffnet und die verschlossene Wurst entnommen. Der verschlossene Abschnitt kann mittels der Schneide 14 abgetrennt werden. Nach dem Öffnen wird mittels nicht dargestellter und dem Fachmann geläufiger Vorrichtungen eine Verschlußklammer aus dem Magazin 11 bei 12 in die Führungsbahn geführt, dort gehaltert, und steht für einen weiteren Verschließvorgang bereit. Das Schlaufenträgerband 15 wird soweit vortransportiert, daß eine neue Schlaufe 16 durch Umlenkung an der Kante 17 sich vom Band 15 ablöst und schräg von unten etwa in die Fig. 2 dargestellte Position geschwenkt wird. Um das Ablösen zu erleichtern, ist der vorderste Teil des vorlaufenden Endes 18 vorzugsweise nicht auf dem Trägerband 15 verklebt, solche Verklebungen sind vorzugsweise im vorderen Drittel jeder Schlaufe und im hinteren Drittel bzw. im Endbereich jeder Schlaufe vorgesehen. Das Einschwenken des vorlaufenden Schlaufenendes 18 geschieht in Öffnungsstellung des abklappbaren Teils 5, so daß, wie insbesondere in Fig. 1 zu erkennen ist, ausreichend Platz für diesen Einschwenkvorgang vorhanden ist.

Die Anordnung ist jetzt für einen weiteren Verschließvorgang bereit. Die Bedienungsperson legt zu diesem Zweck den zu verschießenden Abschnitt einer Verpackungshülle so ein, daß er auf der Matrize 10 zu liegen kommt. Anschließend wird mittels des Hebels 13 der abklappbare Teil 5 in seine Schließstellung gebracht, in der seine Führungsnut 7 zusammen mit der Nut 6 die Führungsbahn für die Verschlußklammer bildet. Durch das Schließen des Teils 5 wird die pneumatische Betätigung des Zylinders 8 und des Stempels 9 ausgelöst. Die bei 12 zugeführte Verschlußklammer fährt nach unten, nimmt dabei das vorlaufende Ende 18 der Schlaufe mit und reißt diese Schlaufe vom Trägerband 15 ab. Die Verschlußklammer wird durch zusammenwirken von Stempel 9 und Matrize 10 um die Verpackungshülle herum geklammert und die Schlaufe 16 dabei mit eingebunden. Der abklappbare Teil 5 wird geöffnet und der nächste Verschließvorgang kann beginnen.

## Patentansprüche

1. Anordnung zum Anbringen einer Verschlußklammer an einer Verpackungshülle, mit einer zur Verschlußstelle führenden Führungsbahn für Verschlußklammern, und mit einer Einrichtung zum Einbringen einer Aufhängeschlaufe (16) in die Führungsbahn unter Verwendung eines flexiblen Schlaufenträgerbandes (15), auf dem eine Mehrzahl von Aufhängeschlaufen (16) aufgereiht sind, **dadurch gekennzeichnet, daß** die Zufuhr des Schlaufenträgerbandes (15) zur Führungsbahn in einem spitzen Winkel relativ zur Richtung dieser Führungsbahn erfolgt und daß im Bereich der Führungsbahn eine Umlenkung (17) des Schlaufenträgerbandes (15) dergestalt vorgesehen ist, daß durch den Umlenkvorgang das vorlaufende Ende (18) einer Schlaufe (16) vom Trägerband (15) abgelöst und in die Führungsbahn eingeschwenkt wird.

2. Anordnung nach Anspruch 1, **dadurch gekennzeichnet, daß** im Bereich der Verschlußstelle ein beweglicher Abschnitt (5) der die Führungsbahn begrenzenden Führungseinrichtungen (5,6,7) von einer Schließstellung in eine Öffnungsstellung bringbar ist.

3. Anordnung nach Anspruch 2, **dadurch gekennzeichnet, daß** der bewegliche Abschnitt (5) von der Schließstellung in die Öffnungsstellung verschwenkbar ist.

4. Anordnung nach einem der Ansprüche 1 bis 3, **dadurch gekennzeichnet, daß** die Zufuhr des Schlaufenträgerbandes (15) in einem Winkel von 10° bis 80°, vorzugsweise 20° bis 70°, weiter vorzugsweise 30° bis 60° relativ zur Richtung der Führungsbahn für Verschlußklammern erfolgt.

5. Anordnung nach einem der Ansprüche 1 bis 4, **dadurch gekennzeichnet, daß** in Förderrichtung des Schlaufenträgerbandes (15) hinter der Umlenkung (17) eine zweite Umlenkung (20) des leeren Trägerbandes (19) dergestalt erfolgt, daß das leere Trägerband (19,21) seitlich von der Führungsbahn weg abgeführt wird.

6. Anordnung nach Anspruch 5, **dadurch gekennzeichnet, daß** das leere Trägerband (19,21) hinter der zweiten Umlenkung (20) quer zur Führungsbahn abgeführt wird.

7. Anordnung nach Anspruch 5 oder 6, **dadurch gekennzeichnet, daß** die zweite Umlenkung an einer relativ zur Führungsbahn geneigten Umlenkkante (20) erfolgt.

8. Verfahren zum Anbringen einer Verschlußklammer und einer Aufhängeschlaufe an einer Verpackungshülle unter Verwendung einer Anordnung nach einem der Ansprüche 1 bis 7, mit den Schritten:
- Einlegen des zu verschließenden Abschnitts der Verpackungshülle in die Verschlußstelle der Anordnung,
- Einlegen einer Verschlußklammer in die Führungsbahn,
- Zuführen eines Schlaufenträgerbandes (15) in einem spitzen Winkel relativ zur Richtung der Führungsbahn,
- Einschwenken einer Aufhängeschlaufe (16) in die Führungsbahn der Verschlußklammern durch Transportieren des Schlaufenträgerbandes (15) in Förderrichtung,
- Setzen der Klammer auf die Verpackungshülle unter Mitnahme der in die Klammerführungsbahn eingeschwenkten Aufhängeschlaufe (16),
- Entnahme der verschlossenen Verpackungshülle.

9. Verfahren nach Anspruch 8, **dadurch gekennzeichnet, daß** die Schlaufen (16) auf dem Schlaufenträgerband (15) einander überlappend angeordnet sind und daß jeweils die in Förderrichtung des Bandes vorlaufende Schlaufe über der zugehörigen nachlaufenden Schlaufe liegt.

10. Verfahren nach Anspruch 8 oder 9, **dadurch gekennzeichnet, daß** die Schlaufen (16) mit ihrer größten Erstrekkung in Längsrichtung auf dem Schlaufenträgerband (15) angeordnet sind.

## Claims

1. An apparatus for applying a sealing clip to a packaging casing, having a guide path for sealing clips leading to the closure location, and having a means for introducing a hanging loop (16) into the guide path using a flexible loop carrier belt, on which a plurality of hanging loops (16) are arranged in series, **characterised in that** the feed of the loop carrier belt (15) to the guide path is effected at an acute angle relative to the direction of this guide path, and **in that** a deflection (17) of the loop carrier belt (15) is provided in the vicinity of the guide path so that as a result of the deflection process the leading end (18) of a loop (16) is detached from the carrier belt (15) and is swung into the guide path.

2. An apparatus according to Claim 1, **characterised in that** in the vicinity of the closure location a movable portion (5) of the guide means(6,7) delimiting the guide path can be brought from a closed position into an open position.

3. An apparatus according to Claim 2, **characterised in that** the movable portion (5) can be pivoted from the closed position into the open position.

4. An apparatus according to any one of Claims 1 to 3, **characterised in that** the feed of the loop carrier belt (15) takes place at an angle of 10° to 80°, preferably 20° to 70°, more preferably 30° to 60°, relative to the direction of the guide path for sealing clips.

5. An apparatus according to any one of Claims 1 to 4, **characterised in that** in the conveying direction of the loop carrier belt (15) downstream of the deflection (17) a second deflection (20) of the empty carrier belt (19) is carried out so that the empty carrier belt (19,21) is discharged laterally away from the guide path.

6. An apparatus according to Claim 5, **characterised in that** the empty carrier belt (19,21) is discharged downstream of the second deflection (20) transversely to the guide path.

7. An apparatus according to Claim 5 or 6, **characterised in that** the second deflection is effected at a deflection edge (20) inclined relative to the guide path.

8. A method of applying a sealing clip and a hanging loop to a packaging casing using an assembly according to any one of Claims 1 to 7, having the steps of:
- inserting the portion of the packaging casing to be sealed into the closure location of the assembly,
- inserting a sealing clip into the guide path,
- feeding a loop carrier belt (15) at an acute angle relative to the direction of the guide path,
- pivoting a hanging loop (16) into the guide path of the sealing clips by conveying the loop carrier belt (15) in conveying direction, '
- applying the clip to the packaging casing while entraining the hanging loop (16) pivoted into the clip guide path,
- removing the sealed packaging casing.

9. A method according to Claim 8, **characterised in that** the loops are disposed on the loop carrier belt (15) overlapping one another, and **in that** the respective leading loop in the conveying direction of the belt is situated above the associated trailing loop.

10. A method according to Claim 8 or 9, **characterised in that** the loops (16) are disposed with their greatest extension in longitudinal direction on the loop carrier belt (15).

## Revendications

1. Dispositif de pose d'une agrafe de fermeture sur une enveloppe d'emballage, comportant une voie de guidage menant à l'emplacement de fermeture pour des agrafes de fermeture, et comportant un dispositif pour introduire une boucle d'accrochage (16) dans la voie de guidage, par utilisation d'une bande de support de boucle (15) flexible, sur laquelle est alignée une pluralité de boucles d'accrochage (16), **caractérisé en ce que** l'amenée de la bande de support de boucle (15) à la voie de guidage s'effectue suivant un angle aigu par rapport à la direction de cette voie de guidage, et **en ce que** dans la zone de la voie de guidage est prévu un renvoi (17) de la bande de support de boucle (15) tel que l'opération de renvoi détache l'extrémité avant (18) d'une boucle (16) de la bande de support (15) et la fait pivoter à l'intérieur de la voie de guidage.

2. Dispositif selon la revendication 1, **caractérisé en ce que** dans la zone de l'emplacement de fermeture, une partie mobile (5) des dispositifs de guidage (6, 7) délimitant la voie de guidage, peut être amenée d'une position de fermeture dans une position d'ouverture.

3. Dispositif selon la revendication 2, **caractérisé en ce que** la partie mobile (5) peut pivoter de la position de fermeture à la position d'ouverture.

4. Dispositif selon l'une des revendications 1 à 3, **caractérisé en ce que** l'amenée de la bande de support de boucle (15) s'effectue suivant un angle de 10° à 80°, de préférence de 20° à 70°, de préférence encore de 30° à 60° par rapport à la direction de la voie de guidage de l'agrafe de fermeture.

5. Dispositif selon l'une des revendications 1 à 4, **caractérisé en ce que** derrière le renvoi (17), dans le sens de transport de la bande de support de boucle (15), s'effectue un deuxième renvoi (20) de la bande de support (19) vide, tel que la bande de support (19, 21) vide est évacuée latéralement de la voie de guidage.

6. Dispositif selon la revendication 5, **caractérisé en ce que** la bande de support (19, 21) vide est évacuée derrière le deuxième renvoi (20), transversalement à la voie de guidage.

7. Dispositif selon la revendication 5 ou 6, **caractérisé en ce que** le deuxième renvoi s'effectue sur un bord de renvoi (20) incliné par rapport à la voie de guidage.

8. Procédé de pose d'une agrafe de fermeture et d'une boucle d'accrochage sur une enveloppe d'emballage par utilisation d'un dispositif selon l'une des revendications 1 à 7, comportant les étapes suivantes :
- introduction de la partie de fermeture de l'enveloppe d'emballage dans l'emplacement de fermeture du dispositif,
- introduction d'une agrafe de fermeture dans la voie de guidage,
- amenée d'une bande de support de boucle (15) suivant un angle aigu par rapport à la direction de la voie de guidage,
- pivotement d'une boucle d'accrochage (16) à l'intérieur de la voie de guidage des agrafes de fermeture, par transport de la bande de support de boucle (15) dans le sens de transport,
- mise en place de l'agrafe sur l'enveloppe d'emballage par entraînement de la boucle d'accrochage (16) pivotée à l'intérieur de la voie de guidage d'agrafe,
- prélèvement de l'enveloppe d'emballage fermée.

9. Procédé selon la revendication 8, **caractérisé en ce que** les boucles (16) sont disposées sur la bande de support de boucle (15) de manière à se recouvrir les unes les autres et **en ce que** la boucle avant dans le sens de transport de la bande se situe au-dessus de la boucle suivante correspondante.

10. Procédé selon la revendication 8 ou 9, **caractérisé en ce que** les boucles (16) sont disposées avec leur plus grande étendue dans la direction longitudinale sur la bande de support de boucle (15).
